# EUROPÄISCHE PATENTANMELDUNG

(11) **EP 3 734 494 A1**
(43) Veröffentlichungstag der Anmeldung: **04.11.2020**
(21) Anmeldenummer: 19172177.8
(22) Anmeldetag: 02.05.2019
(51) Int. Cl.: G06K 7/10, H04B 5/00

(54) **VERFAHREN ZUM ERFASSEN WENIGSTENS EINES TRANSPONDERS MIT EINEM FUNKSYSTEM SOWIE FUNKSYSTEM**

(71) Anmelder: Feig Electronic GmbH, 35781 Weilburg (DE)
(72) Erfinder: Desch, Markus, 35781 Weilburg (DE)
(74) Vertreter: Knefel, Cordula

(57) **Zusammenfassung**

Die Erfindung betrifft ein Verfahren zum Erfassen wenigstens eines Transponders mit einem Funksystem, welches wenigstens einen Reader und wenigstens eine Sende-/Empfangsantenne und wenigstens einen Transponder aufweist, bei dem
- wenigstens eine Zusatzantenne vorgesehen ist,
- die wenigstens eine Zusatzantenne zumindest zeitweise während des Empfangvorganges des Sendesignales durch den Transponder wenigstens ein zusätzliches Signal sendet,
- durch das zusätzliche Signal das von dem wenigstens einen Transponder empfangene Sendesignal der wenigstens einen Sende-/Empfangsantenne gestört oder in der Intensität reduziert wird,
- die wenigstens eine Sende-/Empfangsantenne und die wenigstens eine Zusatzantenne räumlich voneinander abweichende Sendebereiche aufweisen.

Darüber hinaus betrifft die Erfindung ein Funksystem.

## Beschreibung

Die Erfindung betrifft ein Verfahren zum Erfassen wenigstens eines Transponders mit einem Funksystem, welches wenigstens einen Reader und wenigstens eine Sende-/Empfangsantenne und wenigstens einen Transponder aufweist, sowie ein Funksystem, welches wenigstens einen Reader und wenigstens eine Sende-/Empfangsantenne und wenigstens einen Transponder aufweist.

Aus der Praxis ist bekannt, Transponder in RFID-Funksystemen (Radio Frequency Identification) zu verwenden, nämlich in Niedrigfrequenzfunksystemen (LF-Funksystemen) oder in Hochfrequenzfunksystemen (HF-Funksystemen) oder in Ultrahochfrequenzfunksystemen (UHF-Funksystemen).

Die LF-Systeme arbeiten in Frequenzbändern von 9 kHz bis 135 kHz. Die HF-Systeme arbeiten unter anderem bei 13,56 MHz und die UHF-Systeme arbeiten zum Beispiel in Frequenzbändern von 865 bis 870 MHz oder 902 bis 928 MHz.

Gemäß der DE 10 2017 105 822 A1 werden RFID-Antennensysteme eingesetzt, die zur kontaktlosen Datenübertragung, insbesondere zum Lesen oder Beschreiben von kontaktlosen Datenträgern, sogenannten Transpondern, dienen.

Im HF-Bereich besteht ein RFID-Antennensystem üblicherweise aus einer RFID-Antenne, die wenigstens eine Antennenschleife aufweist, die eine Induktivität darstellt, und aus einer oder mehreren Windungen gebildet wird, die darüber hinaus eine Anpassschaltung aufweist, eine Schreib-/Lesestation (Reader) mit integrierter Sender-/Empfänger- und Steuereinheit und einer Verbindungsleitung zwischen der Schreib-/Lesestation und der RFID-Antenne.

Die RFID-Antenne eines RFID-Systems hat folgende Aufgaben: Einerseits die Übertragung von Energie an den Transponder und andererseits die Übertragung von Daten an und vom Transponder. Die Energie- und Datenübertragung basiert im HF-Bereich auf der magnetischen Kopplung der Wechselfelder des Readers und des Transponders im Nahbereich.

Eine Anforderung an eine RFID-Reader-Antenne ist die Energieübertragung zum Transponder. Dazu wird die Reader-Antenne ihrerseits durch einen Sender mit Energie versorgt.

Ferner muss die Reader-Antenne möglichst gut auf die Betriebsfrequenz des RFID-Systems abgestimmt sein, um eine gute Kopplung und damit eine gute Energie- und Datenübertragung zu erreichen, wozu die Reader-Antenne in der Regel auf Resonanz mit der Betriebsfrequenz abgestimmt wird.

Ist die Resonanzfrequenz der Reader-Antenne auf die Betriebsfrequenz des RFID-Systems abgestimmt, erreicht man mit einer hohen Güte der Reader-Antenne eine hohe Energieübertragung.

Zum Abgleich der Eingangsimpedanz der Reader-Antenne auf die Betriebsfrequenz dient eine Anpassungsschaltung, die sich in der Regel in unmittelbarer Nähe zur Antennenschleife befindet.

Transponder im HF-Bereich bestehen aus einem integrierten Mikroelektronikbauelement (IC) und einem Resonanzkondensator und einer Antennenspule, wobei der Resonanzkondensator häufig bereits in das Mikroelektronikbauelement integriert ist. Die Antennenspule und der Resonanzkondensator bilden einen elektrischen Schwingkreis und werden auf ihre Betriebsfrequenz abgestimmt.

Gelangt ein Transponder in den Sendebereich der Reader-Antenne, so erhält der Transponder über die magnetische Kopplung mit der Sende-/Empfangsantenne Energie zum Betrieb der integrierten Schaltung (IC). Der Betrag der Energie ist abhängig von der Feldstärke beziehungsweise Anzahl der Feldlinien, die den Transponder durchdringen und dem Winkel der Feldlinien zum Transponder. Die maximale Energie erhält der Transponder bei einem Winkel zwischen Feldlinien und Transponder von 90 Grad. Ist der Winkel zwischen Feldlinien und Transponder sehr spitz oder sogar 0 Grad, so wird der Transponder nicht von Feldlinien durchdrungen und erhält somit auch keine Energie. Ist die Energie groß genug, wird das IC in den Grundzustand versetzt und beginnt zu arbeiten.

Ein Ultrahochfrequenz-RFID-System besteht üblicherweise aus mindestens einer UHF-RFID-Antenne, einer Schreib-/Lesestation (Reader) mit integrierter Sende-/ Empfänger- und Steuereinheit und einer Verbindungsleitung zwischen der Schreib-/Lesestation und der UHF-RFID-Antenne.

Die Energie- und Datenübertragung basiert im UHF-Bereich meist auf der Basis von elektromagnetischen Wellen.

Transponder bestehen in diesem Fall aus einem integrierten Mikroelektronikbauelement (IC) und einer an das Mikroelektronikbauelement angepassten Antenne.

Gelangt ein Transponder in den Sendebereich einer UHF-Reader-Antenne, so erhält der Transponder über den Empfang der elektromagnetischen Welle mit seiner Antenne Energie zum Betrieb der integrierten Schaltung (IC).

Der Betrag der Energie ist abhängig von der Ausgangsleistung des RFID-Readers, dem Gewinn der Antenne des RFID-Readers, dem Gewinn der Antenne des Transponders, der Sendefrequenz und der Entfernung zwischen Reader-Antenne und Transponder (Friis-Formel). Ist die Energie groß genug, wird das IC in den Grundzustand versetzt und beginnt zu arbeiten.

Der Bereich, in dem der Transponder ausreichend mit Energie versorgt wird und mit dem RFID-System kommunizieren kann, wird Sendebereich genannt. Derartige RFID-Systeme (HF-Reader) sind aus der DE 10 2004 035 621 A1 bekannt.

Die Transponder, die im HF- oder UHF-Bereich arbeiten, sind häufig preisgünstiger als Transponder, die im LF-Bereich arbeiten.

Transponder werden in der Praxis häufig zum Sichern von Waren eingesetzt wie auch zum Erfassen von Waren.

Waren in Kaufhäusern werden häufig mit Transpondern gesichert, damit Waren nicht unbemerkt aus einem Kaufhaus oder dergleichen entfernt werden können. Hierzu werden am Ausgangsbereich des Kaufhauses sogenannte Gate-Antennen aufgestellt, die den Transponder, wenn er nicht an der Kasse entfernt wurde, erfassen und einen Alarm auslösen.

Andererseits werden Transponder auch eingesetzt, um Waren während eines Logistikvorganges zu erfassen. Hierzu werden Waren in größeren Mengen, beispielsweise auf einem LKW durch ein Gate bestehend aus Antennen gefahren. Hierbei muss eine Vielzahl von Transpondern innerhalb kürzester Zeit erfasst werden.

Die aus der Praxis bekannten UHF-Systeme haben eine relativ große Reichweite. Die Reichweite ist schwer zu kontrollieren, da meist verschiedene Transponder mit sehr unterschiedlicher Empfindlichkeit eingesetzt werden. Ein weiteres Problem ist, dass selbst bei gerichteten Antennen keine eindeutige seitliche Einschränkung des zu überwachenden Bereiches vorhanden ist, wenn die Antennen in der Umgebung weiterer Gegenstände installiert sind. Hierzu zählen auch Wände, Türen, Einrichtungsgegenstände und so weiter. Ursache hierfür sind Reflexionen, die an den Gegenständen entstehen können.

Weiterhin treten bei den eingesetzten Antennen auch so genannte Nebenkeulen auf. Das bedeutet, dass der Sendebereich nicht nur einen Hauptbereich aufweist, sondern auch Nebenbereiche, die zwar eine verminderte Sende- und Empfangsstärke aufweisen, die jedoch gerade im Nahbereich einen sehr ungerichteten Erkennungsbereich verursachen.

Aus der Praxis ist es bekannt, das Problem der Sendebereichsbegrenzung durch eine Abschirmung baulicher Art der Bereiche zu lösen. Nachteil ist, dass eine Abschirmung den Sendebereich mechanisch und/oder optisch eingrenzt. Das heißt, das Bewegen von Gegenständen im Sendebereich ist sehr eingeschränkt.

Die zweite aus der Praxis bekannte Lösung ist, gerichtete Antennen zu verwenden, jedoch mit den schon beschriebenen Nachteilen.

Aus der Praxis ist auch bekannt, mehrere gerichtete Antennen zu verwenden. Dies ist jedoch mechanisch sehr aufwendig und kostenintensiv. Darüber hinaus müssen die Transponder mehrfach ausgelesen werden, was den Nachteil hat, dass dies sehr lange dauert und dass bei einer großen Anzahl von Transpondern diese eventuell nicht vollständig erfasst werden.

Aus der Praxis ist auch noch bekannt, eine Abstandsberechnung durchzuführen, das heißt, es wird der Abstand des Transponders von der Antenne berechnet. Auch hierbei müssen die Transponder mehrfach gelesen werden. Dieses Verfahren ist zum einen langsam und zum anderen ungenau, da jeder Transponder sich anders verhält. Bei der Abstandsberechnung müssen Transponder ungefähr zehn Mal ausgelesen werden. Dies ist bei einer Anzahl von beispielsweise 30 Transpondern auf verschiedenen Waren schon so aufwendig, dass die Reader-Antenne nicht die gesamte Zahl der Transponder korrekt erfasst.

Wird die Leistung einer Antenne verringert, um den Erfassungsbereich zu beschränken, kann es vorkommen, dass die Transponder ebenfalls nicht mehr erfasst werden. Die aus der Praxis bekannten Transponder weisen unterschiedliche Empfindlichkeiten auf, da es sich nicht um hoch technisierte Produkte handelt, sondern in der Regel preiswerte Transponder verwendet werden. Insbesondere wenn Einweg-Transponder verwendet werden, sind die Empfindlichkeiten sehr unterschiedlich.

Die Transponder müssen auch gut angesprochen werden, damit sämtliche Waren erfasst werden, beispielsweise wenn Waren gestapelt werden.

Das der Erfindung zugrunde liegende technische Problem besteht darin, ein Verfahren und eine Vorrichtung anzugeben, mit denen eine Sendebereichsbegrenzung bei Funksystemen in einfacher Art und Weise zuverlässig und preiswert geschaffen werden kann.

Dieses technische Problem wird durch ein Verfahren mit den Merkmalen gemäß Anspruch 1 sowie durch ein Funksystem mit den Merkmalen gemäß Anspruch 13 gelöst.

Das erfindungsgemäße Verfahren zum Erfassen wenigstens eines Transponders mit einem Funksystem, welches wenigstens einen Reader und wenigstens eine Sende-/Empfangsantenne und wenigstens einen Transponder aufweist, bei dem der Reader oder die wenigstens eine Sende-/Empfangsantenne wenigstens ein Sendesignal erzeugt, wobei das Sendesignal von dem Transponder empfangen und ausgewertet wird, wobei der Reader oder die wenigstens eine Sende-/Empfangsantenne ein Antwortsignal von dem Transponder empfängt und damit den Transponder erfasst, zeichnet sich dadurch aus,
- dass wenigstens eine Zusatzantenne vorgesehen ist,
- dass die wenigstens eine Zusatzantenne zumindest zeitweise während des Empfangsvorganges des Sendesignales durch den Transponder wenigstens ein zusätzliches Signal sendet und
- dass durch das zusätzliche Signal das von dem wenigstens einen Transponder empfangene Sendesignal der wenigstens einen Sende-/Empfangsantenne gestört oder in der Intensität reduziert und
- dass die wenigstens eine Sende-/Empfangsantenne und die wenigstens eine Zusatzantenne räumlich voneinander abweichende Sendebereiche aufweisen.

Technische Grundlage für die Reduktion der Empfindlichkeit oder der Störung des Sendesignales ist der Effekt, dass Transponder üblicherweise ein amplitudenmoduliertes Signal auswerten. Damit das Signal gut empfangen werden kann, benötigt der Transponder meist eine Modulationstiefe von nahezu 100 %. Wird ein Transponder während des Empfangs eines Signales von einem zweiten Feld gleicher oder ähnlicher Frequenz erreicht, überlagert dieses Feld das Sendesignal und der Transponder kann schon bei einem relativ geringen zweiten Signal oder bei einer relativ geringen zweiten Feldstärke kein hundertprozentig moduliertes Empfangssignal erkennen. Dadurch ist die Empfindlichkeit dieses Transponders stark reduziert. Der Transponder kann das zu empfangende Signal nur auswerten, wenn dieses deutlich stärker als die Amplitude des zweiten Signales ist.

Mit dem erfindungsgemäßen Verfahren ist es möglich, den Sendebereich wenigstens eines RFID-Readers und wenigstens einer Sende-/Empfangsantenne einzugrenzen. Beispielsweise besteht die Möglichkeit, im Bereich einer Kasse eine Sende-/Empfangsantenne so anzuordnen, dass der Kassenbereich mit einem Durchmesser von zum Beispiel einem Meter von der Sende-/Empfangsantenne erfasst wird, das heißt, Transponder, die sich in einem Sendebereich einer Halbkugel mit einem Durchmesser von einem Meter befinden, können erfasst werden. Eine zweite Antenne, das heißt die Zusatzantenne kann so angeordnet werden, dass der Sendebereich sich nicht auf eine Nachbarkasse mit einem weiteren Reader und einer Sende-/Empfangsantenne erstreckt.

Das Sendesignal, welches von dem Reader oder der wenigstens einen Sende-/Empfangsantenne erzeugt wird, dient zum Erfassen der Transponder. Es handelt sich um das Sendesignal, welches auch gemäß dem Stand der Technik von dem Reader oder der wenigstens einen Sende-/Empfangsantenne ausgesendet wird.

Gemäß einer vorteilhaften Ausführungsform der Erfindung ist vorgesehen, dass das Sendesignal des Readers oder der wenigstens einen Sende-/Empfangsantenne und das Signal der wenigstens einen Zusatzantenne die gleiche Frequenz aufweisen.

Diese Ausführungsform weist den Vorteil auf, dass der wenigstens eine Transponder in dem Empfang auf jeden Fall gestört wird. Jeder Transponder weist einen Eingangsfilter auf. Von den eingestellten Frequenzen abweichende Frequenzen werden unter Umständen von dem Eingangsfilter ausgefiltert, so dass eine gleiche oder ähnliche Frequenz besonders vorteilhaft ist.

Gemäß einer weiteren vorteilhaften Ausführungsform der Erfindung ist vorgesehen, dass das Signal der wenigstens einen Zusatzantenne lediglich zeitweise während des Sendens des von dem wenigstens einen Transponder empfangenen Sendesignales gesendet wird.

Diese Ausführungsform weist den Vorteil auf, dass der Reader nicht dauerhaft sendet, wodurch ein sehr hoher Energieverbrauch entstehen würde. Der hohe Energieverbrauch bedeutet wiederum, dass der Reader sich erhitzt und eine Kühlung vorgesehen sein muss. Diese Kühlung kann bei einem zeitweisen Senden entfallen. Sendet der Reader beispielsweise nur ein Zehntel der gesamten Sendezeit, erhitzt sich der Reader nicht.

Ist ein zwischen der Sende-/Empfangsantenne und dem Transponder ausgetauschtes Kommunikationsprotokoll zum Beispiel zehn Millisekunden lang, reicht es aus, wenn die Zusatzantenne alle zehn Millisekunden für eine halbe Millisekunde sendet, weil dann auf jeden Fall die Kommunikation gestört wird.

Eine weitere vorteilhafte Ausführungsform der Erfindung sieht vor, dass das Sendesignal der wenigstens einen Sende-/Empfangsantenne oder das Signal der wenigstens einen Zusatzantenne moduliert ist.

Das Signal vom Reader zum Transponder ist im allgemeinen amplitudenmoduliert. Das Signal der Zusatzantenne stört das amplitudenmodulierte Signal vom Reader zum Transponder. Das Signal der Zusatzantenne kann so stark ausgebildet sein, dass es das modulierte Signal für den Transponder stört und so kein Empfang zwischen der Sende-/Empfangsantenne und dem Transponder möglich ist. Es besteht auch die Möglichkeit, das Signal der Zusatzantenne moduliert auszuführen. Das bedeutet, dass Einbrüche in dem Signal vorhanden sind, die nicht von dem Transponder ausgewertet werden können, so dass das Kommunikationsprotokoll, welches zwischen der Sende-/Empfangsantenne und dem Transponder ausgetauscht wird, gestört ist.

Eine weitere vorteilhafte Ausführungsform der Erfindung sieht vor, dass das Signal der wenigstens einen Zusatzantenne einen von dem Signal der wenigstens einen Sende-/Empfangsantenne abweichenden Code aufweist. Dieses ist eine weitere Möglichkeit, um den Austausch des Kommunikationsprotokolles zwischen dem Transponder und der Sende-/Empfangsantenne zu stören.

Gemäß einer weiteren vorteilhaften Ausführungsform der Erfindung ist vorgesehen, dass durch das von der wenigstens einen Zusatzantenne gesendete Signal ein Feld des Sendesignales der wenigstens einen Sende-/Empfangsantenne überlagert wird. Bei dieser Überlagerung kann der Transponder schon bei einem relativ geringen zweiten Signal kein hundertprozentig moduliertes Empfangssignal erkennen, wodurch die Empfindlichkeit dieses Transponders stark reduziert wird.

Vorteilhaft ist vorgesehen, dass durch das von der wenigstens einen Zusatzantenne gesendete Signal die Empfindlichkeit des wenigstens einen Transponders reduziert wird. Hierdurch besteht die Möglichkeit, den Sendebereich räumlich so einzugrenzen, dass Transponder nicht ungewollt außerhalb des vorgesehenen Sendebereiches erfasst werden.

Gemäß einer weiteren vorteilhaften Ausführungsform der Erfindung ist vorgesehen, dass die wenigstens eine Zusatzantenne ein Signal aussendet, welches ein zwischen der wenigstens einen Sende-/Empfangsantenne und dem Transponder ausgetauschtes Kommunikationsprotokoll stört. Wie schon ausgeführt, wird hierdurch die Kommunikation zwischen der Sende-/Empfangsantenne und dem Transponder gestört, so dass in einem entsprechenden Sendebereich der Transponder von der Sende-/Empfangsantenne nicht erfasst wird.

Gemäß einer weiteren vorteilhaften Ausführungsform der Erfindung ist vorgesehen, dass das Signal der wenigstens einen Zusatzantenne mit einer kontinuierlichen Frequenz moduliert wird oder diskrete Modulationen aufweist. Die Modulation mit der kontinuierlichen Frequenz ist zum einen möglich. Zum anderen sind diskrete Modulationen möglich. Wie schon ausgeführt, sind hierbei Einbrüche in dem amplitudenmodulierten Signal vorhanden, die nicht von dem Transponder erfasst werden können, so dass das Kommunikationsprotokoll des Transponders gestört ist.

Gemäß einer weiteren vorteilhaften Ausführungsform der Erfindung ist vorgesehen, dass das Signal der wenigstens einen Zusatzantenne als ein zu dem Sendesignal invertiertes Signal ausgebildet ist oder dass wenigstens ein negativer Puls gesendet wird.

Gemäß einer anderen vorteilhaften Ausführungsform der Erfindung ist vorgesehen, dass das Signal der wenigstens einen Zusatzantenne und das Signal des wenigstens einen Readers mit der wenigstens einen Sende-/Empfangsantenne synchronisiert ausgebildet sind. Ist die Zusatzantenne mit dem Reader synchronisiert, sendet die Zusatzantenne nur dann, wenn ein Transponder tatsächlich ein Signal empfängt. Hierdurch kann vermieden werden, dass der Reader dauerhaft senden muss, was die schon genannten Nachteile der Erhitzung nach sich ziehen würde.

Grundsätzlich besteht auch die Möglichkeit, dass nicht synchronisiert wird. Dann sendet der Störsender - wie auch schon beschrieben - immer wieder, beispielsweise bei einer Protokolllänge von zehn Millisekunden alle zehn Millisekunden für eine halbe Millisekunde. In diesem Fall wird die Kommunikation auf jeden Fall gestört.

Gemäß einer weiteren vorteilhaften Ausführungsform der Erfindung ist vorgesehen, dass die wenigstens eine Zusatzantenne mit einer mit der Frequenz der wenigstens einen Sende-/Empfangsantenne identischen Sendefrequenz sendet. Wie schon ausgeführt, wird in diesem Fall die Frequenz von dem Filter des Transponders nicht ausgefiltert.

Gemäß einer anderen vorteilhaften Ausführungsform der Erfindung ist vorgesehen, dass die wenigstens eine Zusatzantenne mit einer von der Frequenz der wenigstens einen Sende-/Empfangsantenne abweichenden Sendefrequenz sendet. Die heute bekannten Transponder haben häufig Filtereigenschaften von circa ± 1,2 MHz. In diesem Fall wird das Signal "Zusatzantenne" ebenfalls nicht ausgefiltert.

Die Zusatzantenne kann beispielsweise mit einer um 600 kHz abweichenden Frequenz senden.

Diese abweichende Frequenz ist möglich bei UHF-Systemen.

Das erfindungsgemäße Funksystem, welches wenigstens einen Reader und wenigstens eine Sende-/Empfangsantenne und wenigstens einen Transponder aufweist, bei dem der wenigstens eine Reader als ein wenigstens ein Sendesignal erzeugender Reader oder die wenigstens eine Sende-/Empfangsantenne als eine wenigstens ein Sendesignal erzeugende Sende-/Empfangsantenne ausgebildet ist, wobei das Sendesignal von dem Transponder empfangen und ausgewertet wird, wobei die wenigstens eine Sende-/Empfangsantenne als eine ein Antwortsignal von dem Transponder empfangende und damit den Transponder erfassende Sende-/Empfangsantenne ausgebildet ist, zeichnet sich dadurch aus, dass wenigstens eine Zusatzantenne vorgesehen ist, und dass die wenigstens eine Sende-/Empfangsantenne und die wenigstens eine Zusatzantenne räumlich voneinander abweichende Sendebereiche aufweisen und dass die wenigstens eine Zusatzantenne als eine den Sendebereich der wenigstens einen Sende-/Empfangsantenne durch gesendete Signale beschränkende Zusatzantenne ausgebildet ist.

Das erfindungsgemäße Funksystem weist den Vorteil auf, dass durch eine einfache technische Lösung eine Erfassungsbereichsbegrenzung geschaffen wird.

Durch das Vorsehen wenigstens einer Zusatzantenne ist es möglich, die Kommunikation zwischen dem wenigstens einen Transponder und der wenigstens einen Sende-/Empfangsantenne zu stören. Die wenigstens eine Zusatzantenne und die wenigstens eine Empfangsantenne weisen hierzu räumlich voneinander abweichende Sendebereiche auf, so dass der Sendebereich, in dem die Kommunikation zwischen dem wenigstens einen Transponder und der wenigstens einen Sende-/Empfangseinheit stattfindet, räumlich klar definiert werden kann. Durch das Signal der Zusatzantenne wird innerhalb des räumlich begrenzten Sendebereiches eine Kommunikation zwischen dem wenigstens einen Transponder und der wenigstens einen Sende-/Empfangsantenne gestört.

Gemäß einer vorteilhaften Ausführungsform der Erfindung ist vorgesehen, dass die wenigstens eine Sende-/Empfangsantenne und die wenigstens eine Zusatzantenne in dem Reader angeordnet sind. Hierdurch ist es möglich, mittels eines Gerätes den räumlichen Sendebereich von Transpondern zu definieren. Derartige Geräte können beispielsweise in einem Kassenbereich eines Warenhauses eingesetzt werden.

Gemäß einer anderen vorteilhaften Ausführungsform der Erfindung ist vorgesehen, dass die wenigstens eine Sende-/ Empfangsantenne und/oder die wenigstens eine Zusatzantenne außerhalb des Readers angeordnet ist. Die Sende-/Empfangsantenne oder die Zusatzantenne können getrennt von dem Reader, beispielsweise an einer anderen Stelle eines Raumes angeordnet sein.

Hierdurch lassen sich andere räumliche Sendebereiche definieren, als wenn beide Antennen in dem Reader angeordnet sind.

Gemäß einer weiteren vorteilhaften Ausführungsform der Erfindung ist vorgesehen, dass die Sendebereiche der wenigstens einen Sende-/Empfangsantenne und der wenigstens einen Zusatzantenne sich nicht überlappen. Hierbei wird eine Erfassungsbereichsbegrenzung vorgenommen, die in einer anderen Richtung ausgerichtet ist als der Sendebereich der Sende-/Empfangsantenne. Ein Anwendungsbeispiel hierfür ist beispielsweise eine Sende-/Empfangsantenne im Bereich einer Kasse eines Warenhauses und einer Zusatzantenne, wobei die Sende-/Empfangsantenne beispielsweise einen Bereich oberhalb eines Tisches im Bereich der Kasse erfasst, während die Zusatzantenne beispielsweise einen Bereich unterhalb des Tisches, in dem beispielsweise von Waren entfernte Transponder gelagert werden, stört.

Eine weitere vorteilhafte Ausführungsform der Erfindung sieht vor, dass die wenigstens eine Zusatzantenne und der Reader mit der wenigstens einen Sende-/Empfangsantenne synchronisiert ausgebildet sind. Diese Ausführungsform weist den Vorteil auf, dass die Zusatzantenne nur dann sendet, wenn der Reader mit der wenigstens einen Sende-/Empfangsantenne erfasst, dass sich wenigstens ein Transponder im Sendebereich befindet.

Es besteht auch die Möglichkeit, dass die Zusatzantenne und der Reader mit der wenigstens einen Sende-/Empfangsantenne nicht synchronisiert ausgebildet sind. In diesem Fall sendet die Zusatzantenne in bestimmten Abständen, um ein Kommunikationsprotokoll zwischen der Sende-/Empfangsantenne und dem Transponder zu stören.

Vorteilhaft ist das Funksystem als Ultrahochfrequenzsystem (UHF-System) oder als Hochfrequenzsystem (HF-System) ausgebildet. Transponder, die in diesen Frequenzbereichen arbeiten, können relativ preiswert hergestellt werden und werden aus diesem Grunde häufig eingesetzt.

Gemäß einer weiteren vorteilhaften Ausführungsform der Erfindung ist bei UHF-Funksystemen vorgesehen, dass die wenigstens eine Zusatzantenne eine mit der Frequenz der wenigstens einen Sende-/Empfangsantenne identische Sendefrequenz aufweist. Hierdurch ist gewährleistet, dass der Transponder, der in der Regel einen Filter aufweist, die Frequenzen der Zusatzantenne nicht ausfiltert und dass hierdurch die Kommunikation zwischen der Sende-/Empfangsantenne und dem Transponder gestört wird.

Gemäß einer anderen vorteilhaften Ausführungsform der Erfindung ist vorgesehen, dass die wenigstens eine Zusatzantenne eine von der Frequenz der wenigstens einen Sende-/Empfangsantenne abweichende Sendefrequenz aufweist. Diese Anwendung ist bei UHF-Systemen möglich. Die Abweichung liegt beispielsweise bei 600 kHz. Durch diese Ausführungsform besteht die Möglichkeit, durch die Überlagerung des Feldes mit einer entsprechenden Feldstärke die Empfindlichkeit des Transponders zu reduzieren und so die Kommunikation zwischen der Sende-/Empfangsantenne und dem Transponder zu stören.

Gemäß einer weiteren vorteilhaften Ausführungsform der Erfindung ist vorgesehen, dass dass das Signal der wenigstens einen Zusatzantenne als ein zu dem Sendesignal des Readers oder der wenigstens einen Sende-/Empfangsantenne invertiertes Signal ausgebildet ist oder dass in dem Signal der wenigstens einen Zusatzantenne wenigstens ein negativer Puls vorgesehen ist. Ein negativer Puls ist auch schon ausreichend, um das Sendesignal ausreichend zu stören.

Es besteht die Möglichkeit, dass das Signal der wenigstens einen Zusatzantenne als ein moduliertes oder unmoduliertes Signal ausgebildet ist. Ist das Signal als moduliertes Signal ausgebildet, sind beispielsweise Einbrüche vorhanden, die der Transponder aus dem amplitudenmodulierten Signal nicht erkennen kann, wodurch die Kommunikation gestört wird. Ist das Signal als unmoduliertes Signal ausgebildet, kann es ebenfalls die Kommunikation zwischen der Sende-/Empfangsantenne und dem Transponder stören.

Eine weitere besonders vorteilhafte Ausführungsform der Erfindung sieht vor, dass wenigstens zwei Reader in einem Netzwerk angeordnet sind. Vorteilhaft sind die Reader über eine Netzwerkleitung miteinander verbunden. Hierdurch besteht die Möglichkeit, beispielsweise nebeneinanderliegende Räume beispielsweise eines Krankenhauses abzuscannen und zu erfassen, welche technischen Geräte sich in welchem Raum befinden. Ist in einem Raum ein Reader mit einer ersten Sende-/Empfangsantenne angeordnet und im Nachbarraum ein zweiter Reader mit einer Sende-/Empfangsantenne, so kann es vorkommen, dass der erste Reader in dem ersten Raum technische Geräte, die mit einem Transponder versehen sind, des Nachbarraumes erfasst. Durch die Anordnung wenigstens einer Zusatzantenne können die Sendebereiche so abgeschirmt werden, dass jeder Reader mit der Sende-/Empfangsantenne lediglich den ihm zugeordneten Sendebereich erfasst. Sind die Reader über eine Netzwerkleitung miteinander verbunden, können die Reader synchronisiert werden. Das bedeutet, dass der Reader des ersten Raumes die Zusatzantenne aktiviert und ein Störsignal aussendet, während der Reader des Nachbarraumes den ihm zugeordneten Raum abscannt und erfasst, welche Transponder sich in diesem Raum befinden.

Gemäß einer weiteren vorteilhaften Ausführungsform sind wenigstens zwei Sende-/Empfangsantennen vorgesehen, die ein Antennenarray bilden. Hierdurch ist es möglich, für verschiedene Bereiche eine Erfassungsbereichsbegrenzung vorzusehen.

Gemäß einer weiteren vorteilhaften Ausführungsform der Erfindung ist vorgesehen, dass wenigstens zwei Zusatzantennen vorgesehen sind, die ein Antennenarray bilden. Auch hierdurch ist es möglich, einen Sendebereich genau räumlich zu definieren.

Eine weitere vorteilhafte Ausführungsform der Erfindung sieht vor, dass ein erster Reader wenigstens eine Sende-/Empfangsantenne aufweist und dass ein zweiter Reader wenigstens eine Zusatzantenne aufweist. Auch mit dieser Ausführungsform ist es möglich, räumliche Sendebereiche genau zu definieren.

Weitere Merkmale und Vorteile der Erfindung ergeben sich anhand der zugehörigen Zeichnungen, in der mehrere Ausführungsbeispiele des erfindungsgemäßen Verfahrens dargestellt sind, ohne die Erfindung auf diese Ausführungsbeispiele zu beschränken. In den Zeichnungen zeigen:
- Fig. 1: einen Sendebereich gemäß dem Stand der Technik;
- Fig. 2: eine erste erfindungsgemäße Ausführungsform mit zwei Antennen;
- Fig. 3: ein geändertes Ausführungsbeispiel mit zwei Antennen;
- Fig. 4: Darstellungen a) bis d) von Signalen einer Sende-/Empfangsantenne und einer Zusatzantenne;
- Fig. 5: eine Ausführungsform mit Antennenarrays;
- Fig. 6: eine schematische Darstellung eines Readers mit zwei integrierten Antennen;
- Fig. 7: eine schematische Darstellung mit einer integrierten Sende-Empfangsantenne und einer außerhalb des Readers angeordneten Zusatzantenne;
- Fig. 8: eine schematische Darstellung von zwei Räumen;
- Fig. 9: ein geändertes Ausführungsbeispiel mit zwei Readern.

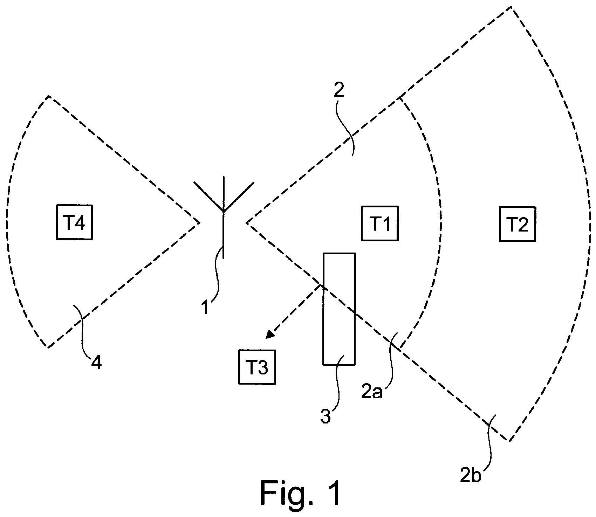

Fig. 1 zeigt eine Sende-/Empfangsantenne 1, die einen ersten Sendebereich 2 aufweist. Transponder T1, T2 weisen unterschiedliche Empfindlichkeiten auf, so dass der Transponder T1 in einem Sendebereich 2a mit der Sende-/Empfangsantenne 1 kommunizieren kann, während ein Transponder T2 noch in einem größeren Sendebereich 2b mit der Sende-/ Empfangsantenne 1 kommunizieren kann. In dem Sendebereich 2a ist ein Gegenstand 3 angeordnet, an dem ein Feld der Sende-/Empfangsantenne 1 reflektiert wird. Aus diesem Grunde erfasst ein Transponder T3 auch noch das Signal der Sende-/Empfangsantenne 1, obwohl er nicht in dem Sendebereich 2 angeordnet ist.

Darüber hinaus strahlt die Sende-/Empfangsantenne 1 auch in den dem Sendebereich 2 abgewandten Bereich 4 ab, so dass ein Transponder T4 ebenfalls mit der Sende-/Empfangsantenne 1 kommunizieren kann.

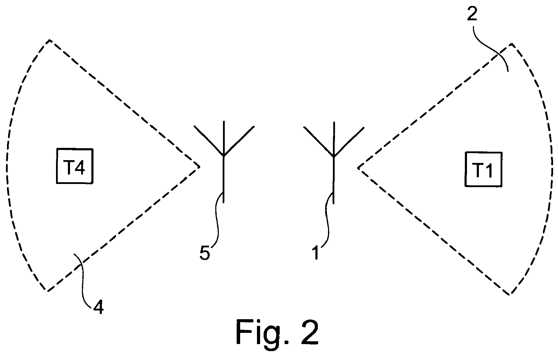

Gemäß Fig. 2 ist die Sende-/Empfangsantenne 1 mit dem Sendebereich 2 dargestellt. Der Transponder T1 kann mit der Sende-/Empfangsantenne 1 ein Kommunikationsprotokoll austauschen. Damit die Sende-/Empfangsantenne 1 nicht einen Transponder T4 erfasst, ist eine Zusatzantenne 5 vorgesehen, die ein Signal sendet, welches das Signal der Sende-/Empfangsantenne 1 im Sendebereich 4 stört. Entweder wird das Signal der Sende-/Empfangsantenne 1 von dem gesendeten Signal der Zusatzantenne 5 überlagert oder das Signal der Zusatzantenne 5 weist eine Modulation auf, derart, dass das Kommunikationsprotokoll zwischen der Sende-/Empfangsantenne 1 und dem Transponder T4 gestört ist.

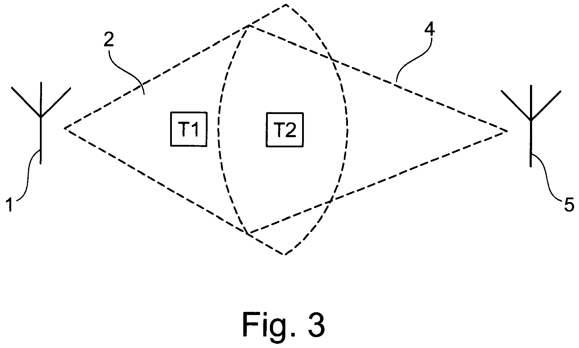

Gemäß Fig. 3 sind die Sende-/Empfangsantenne 1 dargestellt und die Zusatzantenne 5. Der Transponder T1 befindet sich im Sendebereich 2 der Sende-/Empfangsantenne 1 und kann mit der Sende-/Empfangsantenne 1 kommunizieren, während der Transponder T2 sich zwar im Sendebereich 2 der Sende-/Empfangsantenne 1 befindet, jedoch auch im Sendebereich 4 der Zusatzantenne 5, so dass die Kommunikation zwischen der Sende-/Empfangsantenne 1 und dem Transponder T2 gestört ist.

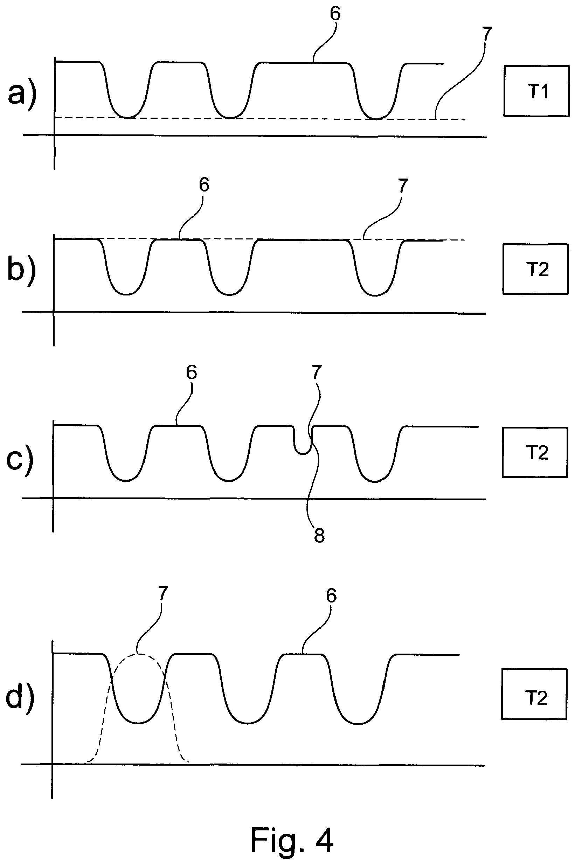

Die Signale der Transponder T1, T2 sind in Fig. 4 in den Darstellungen a) bis d) dargestellt.

In der Darstellung a) ist das Signal des Transponders T1 dargestellt. Es liegt an dem Transponder T1 ein moduliertes Signal 6 an. Mit der gestrichelten Linie ist ein Signal 7 dargestellt, welches von der Zusatzantenne 5 ausgesendet wird. Das Signal 7 ist so schwach, dass das Signal 7 das Signal 6 für den Transponder T1 nicht stört, so dass ein Empfang möglich ist.

In der Zeichnung b) der Fig. 4 ist das Signal für den Transponder T2 gemäß Fig. 3 dargestellt. Das Signal 6 des Transponders T2 ist ein moduliertes Signal. Das gestrichelt dargestellte Signal 7 der Zusatzantenne 5 ist jedoch so stark, dass das Signal 6 für den Transponder T2 gestört ist, so dass der Transponder T2 von der Sende-/Empfangsantenne 1 kein Signal erhalten kann.

Eine andere Möglichkeit ist in der Zeichnung c) der Fig. 4 dargestellt. Das Signal 6, welches von der Sende-/ Empfangsantenne 1 ausgesendet wird, ist moduliert. Das Signal 7, welches von der Zusatzantenne 5 ausgesendet wird, ist ebenfalls moduliert und weist einen zusätzlichen Einbruch 8 auf. Durch diesen Einbruch 8 wird das Kommunikationsprotokoll des Transponders T2 gestört, so dass ebenfalls keine Kommunikation mit der Sende-/Empfangsantenne 1 stattfindet.

Eine weitere Möglichkeit ist in der Zeichnung d) der Fig. 4 dargestellt. Das Signal 6, welches von der Sende-/ Empfangsantenne 1 ausgesendet wird, ist moduliert. Das Signal 7, welches gestrichelt dargestellt ist, ist ein invertiertes Signal, das heißt, dieses Signal ist dem Sendesignal entgegengesetzt ausgestaltet. Durch dieses Signal wird das Kommunikationsprotokoll des Transponders T2 ebenfalls gestört.

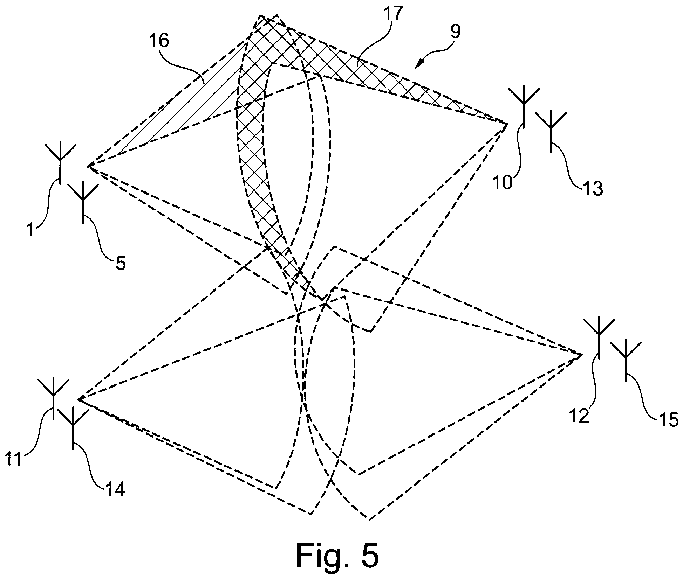

Fig. 5 zeigt ein Array 9 von verschiedenen Strahlen, die von verschiedenen Antennen erzeugt werden. Es handelt sich um die Sende-/Empfangsantenne 1 und die Zusatzantenne 5 wie auch weitere Sende-/Empfangsantennen 10, 11, 12 und Zusatzantennen 13, 14, 15. Von dem Antennenpaar 1, 5 wird ein Sendebereich 16 erzeugt, in dem ein Transponder (nicht dargestellt) mit der Sende-/Empfangsantenne 1 kommunizieren kann. Von dem Antennenpaar 10, 13 wird ein ebenfalls gestrichelt dargestellter schraffierter Sendebereich 17 erzeugt, in dem Transponder (nicht dargestellt) mit der Sende-/Empfangsantenne 10 kommunizieren können. Gleiches gilt für weitere Sendebereiche von den Antennenpaaren 11, 14 und 12, 15, so dass genau definierte Sendebereiche, in denen Transponder mit den Sende-/Empfangsantennen 1, 10, 11, 12 kommunizieren können, ausgebildet werden.

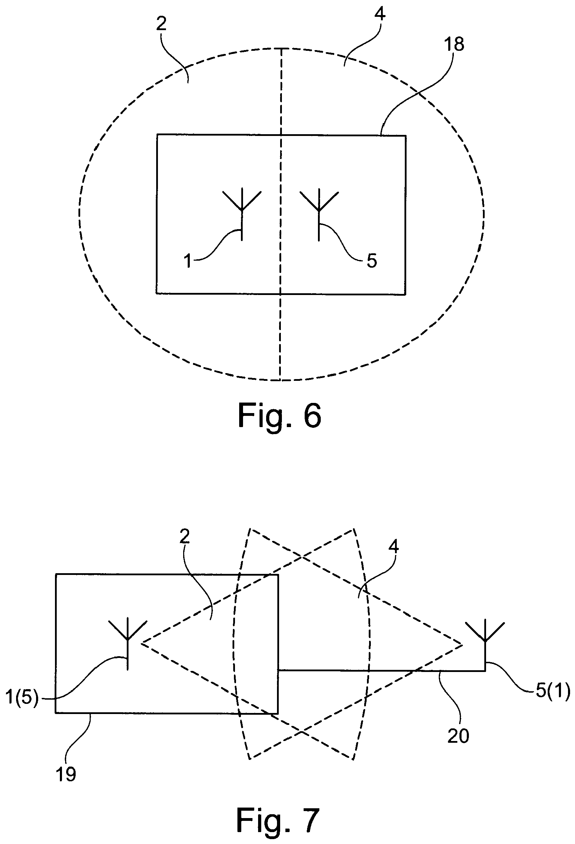

Fig. 6 stellt beispielhaft einen Reader 18 dar. In dem Reader 18 sind die Sende-/Empfangsantenne 1 und die Zusatzantenne 5 angeordnet. Die Sende-/Empfangsantenne 1 weist einen Sendebereich 2 auf, in dem Transponder (nicht dargestellt) mit der Sende-/Empfangsantenne 1 kommunizieren können. Es handelt sich beispielsweise um eine Sende-/Empfangsantenne, die im Bereich einer Kasse eines Warenhauses angeordnet ist und der Sendebereich 2 ist oberhalb eines Tisches (nicht dargestellt) ausgebildet. Der Sendebereich 4, der auch von der Sende-/Empfangsantenne 1 mitabgedeckt wird (beispielsweise ein Bereich unterhalb eines Tisches) wird von der Zusatzantenne 2 mit einem Signal oder Feld beaufschlagt, so dass dieses Feld im Sendebereich 4 das Signal der Sende-/Empfangsantenne 1 überlagert, so dass ein Transponder, der sich im Sendebereich 4 befindet (zum Beispiel zur Lagerung von den von den Waren entfernten Transpondern) von der Sende-/Empfangsantenne 1 nicht erfasst wird.

Fig. 7 stellt einen Reader 19 schematisch dar. In dem Reader 19 ist die Sende-/Empfangsantenne 1 angeordnet. Außerhalb des Readers ist eine Zusatzantenne 5 angeordnet. Es besteht auch die Möglichkeit, dass die Zusatzantenne 5 in dem Reader 19 angeordnet ist und die Sende-/Empfangsantenne 1 außerhalb des Readers angeordnet ist. Zwischen der außerhalb angeordneten Sende-/Empfangsantenne 5, 1 ist eine Verbindungsleitung 20 zu dem Reader 19 vorgesehen. Die Sendebereiche 2, 4 der Sende-/Empfangsantenne 1 und der Zusatzantenne 5 sind ebenfalls in Fig. 7 dargestellt.

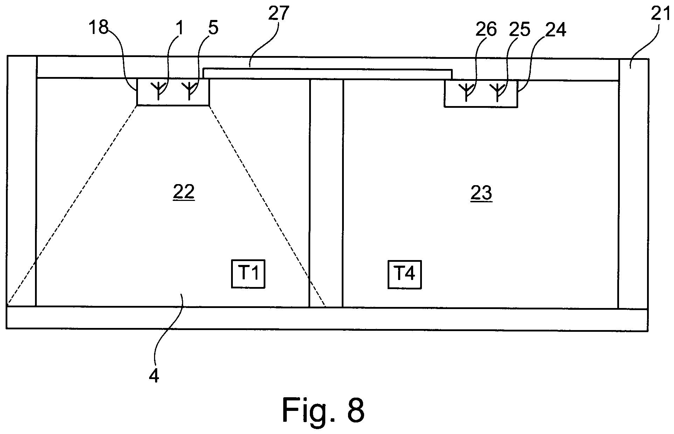

Fig. 8 zeigt ein Gebäude 21 mit zwei Räumen 22, 23. In dem Raum 22 ist der Reader 18 angeordnet, der lediglich schematisch dargestellt ist. Im Raum 23 ist ein Reader 24 angeordnet, der ebenfalls nur schematisch dargestellt ist. In dem Reader 18 ist die Sende-/Empfangsantenne 1 angeordnet sowie die Zusatzantenne 5. In dem Reader 24 ist eine Sende-/Empfangsantenne 25 angeordnet sowie eine Zusatzantenne 26. Wird der Raum 22 von dem Reader 18 gescannt, um einen Transponder 1 zu erfassen, darf der Reader 18 nicht den Transponder 4 erfassen. Ein Anwendungsbeispiel besteht beispielsweise darin, dass es sich um Räume 22, 23 eines Krankenhauses handelt. Die Transponder T1, T4 sind an medizinischen Geräten angeordnet. Um von einer zentralen Stelle aus erfassen zu können, in welchem Raum sich die Geräte befinden, damit sie im Notfall schnell herbeigeschafft werden können, sind diese mit den Transpondern T1, T4 ausgestattet.

Der Reader 18 sendet über die Sende-/Empfangsantenne 1 Signale aus, die den Transponder 1 in dem Raum 22 erfassen. Die Zusatzantenne 5 sendet ein Signal, wenn der Reader 24 den Raum 23 abscannt. Durch das von der Zusatzantenne 5 ausgesandte Signal, welches einen Sendebereich 4 abdeckt, erfasst der Reader 24 über die Sende-/Empfangsantenne 25 nur den Transponder T4 und nicht den Transponder T1, der sich in dem Sendebereich 4 befindet.

Über eine Verbindungsleitung 27, die als Netzwerkleitung ausgebildet ist, kommunizieren die Reader 18, 24. Sobald der Reader 24 mit der Sende-/Empfangsantenne 25 ein Signal aussendet, sendet der Reader 18 über die Zusatzantenne 5 ebenfalls ein Signal aus, welches im Sendebereich 4 als Störsignal wirkt.

Die Zusatzantennen 5, 26 können gleiche Frequenzen aussenden wie die Sende-/Empfangsantennen 1, 25. Es besteht auch die Möglichkeit, dass die Zusatzantennen 5, 26 ähnliche Frequenzen oder andere Frequenzen aussenden. Bei ähnlichen Frequenzen ist üblicherweise eine Abweichung von 0 bis 2 MHz vorhanden.

Bei den drei Möglichkeiten gleiche Frequenzen, ähnliche Frequenzen oder andere Frequenzen auszusenden, besteht auch noch die Möglichkeit, jeweils modulierte oder unmodulierte Signale auszusenden.

Die in Fig. 8 dargestellten Reader 18, 24 mit den Antennen 1, 5, 25, 26 können die Räume 22, 23 im 360 Grad-Winkel abscannen. Um nicht die Transponder in den Nachbarräumen zu erfassen, müssen die Zusatzantennen 5, 26 zur gleichen Zeit senden, wenn im Nachbarraum der Reader den Scanvorgang durchführt.

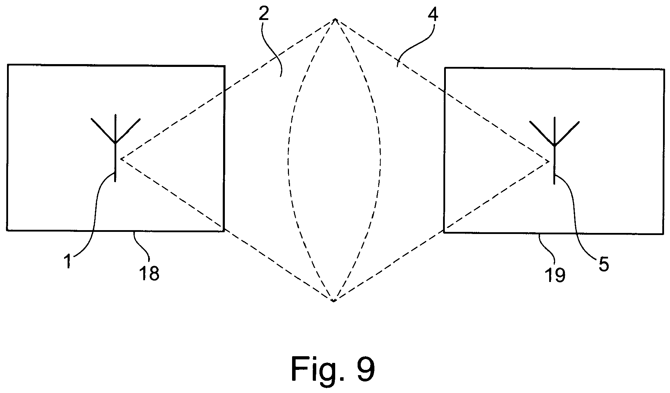

Fig. 9 zeigt einen ersten Reader 18, der eine Sende-/ Empfangsantenne 1 aufweist und einen zweiten Reader 19, der eine Zusatzantenne 5 aufweist. Der Reader 18 weist einen Sendebereich 2 auf und der Reader 19 einen Sendebereich 4.

### Bezugszahlen

- 1: Sende-/Empfangsantenne
- 2: Sendebereich
- 2a: Sendebereich
- 2b: Sendebereich
- 3: Gegenstand
- 4: Sendebereich
- 5: Zusatzantenne
- 6: Signal
- 7: Signal
- 8: Einbruch im Signal
- 9: Array
- 10: Sende-/Empfangsantenne
- 11: Sende-/Empfangsantenne
- 12: Sende-/Empfangsantenne
- 13: Zusatzantenne
- 14: Zusatzantenne
- 15: Zusatzantenne
- 16: Sendebereich
- 17: Sendebereich
- 18: Reader
- 19: Reader
- 20: Verbindungsleitung
- 21: Gebäude
- 22: Raum
- 23: Raum
- 24: Reader
- 25: Sende-/Empfangsantenne
- 26: Zusatzantenne
- 27: Verbindungsleitung (Netzwerkleitung)
- T1: Transponder
- T2: Transponder
- T3: Transponder
- T4: Transponder

## Patentansprüche

1. Verfahren zum Erfassen wenigstens eines Transponders (T1, T2, T3, T4) mit einem Funksystem, welches wenigstens einen Reader (18, 19, 24) und wenigstens eine Sende-/ Empfangsantenne (1, 10, 11, 12, 25) und wenigstens einen Transponder (T1, T2, T3, T4) aufweist, bei dem der Reader (18, 19, 24) oder die wenigstens eine Sende-/Empfangsantenne (1, 10, 11, 12, 25) wenigstens ein Sendesignal erzeugt, wobei das Sendesignal von dem Transponder (T1, T2, T3, T4) empfangen und ausgewertet wird, wobei der Reader (18, 19, 24) oder die wenigstens eine Sende-/Empfangsantenne (1, 10, 11, 12, 25) ein Antwortsignal von dem Transponder (T1, T2, T3, T4) empfängt und damit den Transponder (T1, T2, T3, T4) erfasst,
**dadurch gekennzeichnet,**
- **dass** wenigstens eine Zusatzantenne (5, 13, 14, 15, 26) vorgesehen ist,
- **dass** die wenigstens eine Zusatzantenne (5, 13, 14, 15, 26) zumindest zeitweise während des Empfangvorganges des Sendesignales durch den Transponder (T1, T2, T3, T4) wenigstens ein zusätzliches Signal sendet, und
- **dass** durch das zusätzliche Signal das von dem wenigstens einen Transponder (T1, T2, T3, T4) empfangene Sendesignal der wenigstens einen Sende-/Empfangsantenne (1, 10, 11, 12, 25) gestört oder in der Intensität reduziert wird, und
- **dass** die wenigstens eine Sende-/Empfangsantenne (1, 10, 11, 12, 25) und die wenigstens eine Zusatzantenne (5, 13, 14, 15, 26) räumlich voneinander abweichende Sendebereiche aufweisen.

2. Verfahren nach Anspruch 1, **dadurch gekennzeichnet, dass** das Sendesignal des Readers (18, 19, 24) oder der wenigstens einen Sende-/Empfangsantenne (1, 10, 11, 12, 25) und das Signal der wenigstens einen Zusatzantenne (5, 13, 14, 15, 26) die gleiche Frequenz aufweisen.

3. Verfahren nach Anspruch 1 oder 2, **dadurch gekennzeichnet, dass** das Signal der wenigstens einen Zusatzantenne (5, 13, 14, 15, 26) lediglich zeitweise während des Sendens des von dem wenigstens einen Transponder (T1, T2, T3, T4) empfangenen Sendesignales gesendet wird.

4. Verfahren nach einem der vorhergehenden Ansprüche, **dadurch gekennzeichnet, dass** das Signal der wenigstens einen Sende-/Empfangsantenne (1, 10, 11, 12, 25) und/oder das Signal der wenigstens einen Zusatzantenne (5, 13, 14, 15, 26) moduliert ist.

5. Verfahren nach Anspruch 4, **dadurch gekennzeichnet, dass** die Modulation des Signales der wenigstens einen Zusatzantenne (5, 13, 14, 15, 26) der Modulation des Signales der wenigstens einen Sende-/Empfangsantenne (1, 10, 11, 12, 25) entspricht, und dass ein abweichender Code gesendet wird.

6. Verfahren nach einem der vorhergehenden Ansprüche, **dadurch gekennzeichnet, dass** durch das von der wenigstens einen Zusatzantenne (5, 13, 14, 15, 26) gesendete Signal ein Feld des Sendesignales der wenigstens einen Sende-/ Empfangsantenne (1, 10, 11, 12, 25) überlagert wird.

7. Verfahren nach einem der vorhergehenden Ansprüche, **dadurch gekennzeichnet, dass** durch das von der wenigstens einen Zusatzantenne (5, 13, 14, 15, 26) gesendete Signal die Empfindlichkeit des wenigstens einen Transponders (T1, T2, T3, T4) reduziert wird.

8. Verfahren nach einem der vorhergehenden Ansprüche, **dadurch gekennzeichnet, dass** die wenigstens eine Zusatzantenne (5, 13, 14, 15, 26) ein Signal aussendet, welches ein zwischen der wenigstens einen Sende-/Empfangsantenne (1, 10, 11, 12, 25) und dem Transponder (T1, T2, T3, T4) ausgetauschtes Kommunikationsprotokoll stört.

9. Verfahren nach einem der vorhergehenden Ansprüche, **dadurch gekennzeichnet, dass** das Signal der wenigstens einen Zusatzantenne (5, 13, 14, 15, 26) mit einer kontinuierlichen Frequenz moduliert wird oder diskrete Modulationen aufweist.

10. Verfahren nach einem der vorhergehenden Ansprüche, **dadurch gekennzeichnet, dass** das Signal der wenigstens einen Zusatzantenne (5, 13, 14, 15, 26) als invertiertes Signal zu dem Sendesignal der Sende-/Empfangsantenne (1, 10, 11, 12, 25) ausgebildet ist oder dass ein negativer Puls gesendet wird.

11. Verfahren nach einem der vorhergehenden Ansprüche, **dadurch gekennzeichnet, dass** das Funk-Signal der wenigstens einen Zusatzantenne (5, 13, 14, 15, 26) und das Funk-Signal des wenigstens einen Readers (18, 19, 24) mit der wenigstens einen Sende-/Empfangsantenne (1, 10, 11, 12, 25) synchronisiert ausgebildet sind.

12. Verfahren nach einem der Ansprüche 1 bis 10, **dadurch gekennzeichnet, dass** die wenigstens eine Zusatzantenne (5, 13, 14, 15, 26) mit einer von der Frequenz der wenigstens einen Sende-/Empfangsantenne (1, 10, 11, 12, 25) abweichenden Sendefrequenz sendet.

13. Funksystem, welches wenigstens einen Reader und wenigstens eine Sende-/Empfangsantenne (1, 10, 11, 12, 25) und wenigstens einen Transponder (T1, T2, T3, T4) aufweist, bei dem der wenigstens eine Reader (18, 19, 24) als ein wenigstens ein Sendesignal erzeugender Reader (18, 19, 24) oder die wenigstens eine Sende-/Empfangsantenne (1, 10, 11, 12, 25) als eine wenigstens ein Sendesignal erzeugende Sende-/Empfangsantenne (1, 10, 11, 12, 25) ausgebildet ist, wobei das Sendesignal von dem Transponder (T1, T2, T3, T4) empfangen und ausgewertet wird, wobei die wenigstens eine Sende-/Empfangsantenne (1, 10, 11, 12, 25) als eine ein Antwortsignal von dem Transponder (T1, T2, T3, T4) empfangende und damit den Transponder (T1, T2, T3, T4) erfassende Sende-/Empfangsantenne (1, 10, 11, 12, 25) ausgebildet ist, **dadurch gekennzeichnet, dass** wenigstens eine Zusatzantenne (5, 13, 14, 15, 26) vorgesehen ist, und dass die wenigstens eine Sende-/Empfangsantenne (1, 10, 11, 12, 25) und die wenigstens eine Zusatzantenne (5, 13, 14, 15, 26) räumlich voneinander abweichende Sendebereiche aufweisen, und dass die wenigstens eine Zusatzantenne (5, 13, 14, 15, 26) als eine den räumlichen Sendebereich (2) der wenigstens einen Sende-/Empfangsantenne (1, 10, 11, 12, 25) durch gesendete Signale beschränkende Zusatzantenne (5, 13, 14, 15, 26) ausgebildet ist.

14. Funksystem nach Anspruch 13, **dadurch gekennzeichnet, dass** die wenigstens eine Sende-/Empfangsantenne (1, 10, 11, 12, 25) und/oder die wenigstens eine Zusatzantenne (5, 13, 14, 15, 26) in dem Reader (18, 19, 24) angeordnet ist/sind.

15. Funksystem nach Anspruch 13, **dadurch gekennzeichnet, dass** die wenigstens eine Sende-/Empfangsantenne (1, 10, 11, 12, 25) und/oder die wenigstens eine Zusatzantenne (5, 13, 14, 15, 26) außerhalb des Readers (18, 19, 24) angeordnet ist/sind.

16. Funksystem nach einem der Ansprüche 13 bis 15, **dadurch gekennzeichnet, dass** die Sendebereiche (2, 4) der wenigstens einen Sende-/Empfangsantenne (1, 10, 11, 12, 25) und der wenigstens einen Zusatzantenne (5, 13, 14, 15, 26) sich wenigstens teilweise überlappen.

17. Funksystem nach einem der Ansprüche 13 bis 15, **dadurch gekennzeichnet, dass** die Sendebereiche (2, 4) der wenigstens einen Sende-/Empfangsantenne (1, 10, 11, 12, 25) und der wenigstens einen Zusatzantenne (5, 13, 14, 15, 26) sich nicht überlappen.

18. Funksystem nach einem der Ansprüche 13 bis 17, **dadurch gekennzeichnet, dass** die wenigstens eine Zusatzantenne (5, 13, 14, 15, 26) und der Reader (18, 19, 24) mit der wenigstens einen Sende-/Empfangsantenne (1, 10, 11, 12, 25) synchronisiert ausgebildet sind.

19. Funksystem nach einem der Ansprüche 13 bis 18, **dadurch gekennzeichnet, dass** das Funksystem als Ultrahochfrequenzsystem (UHF-System) oder als Hochfrequenzsystem (HF-System) ausgebildet ist.

20. Funksystem nach einem der Ansprüche 13 bis 19, **dadurch gekennzeichnet, dass** die wenigstens eine Zusatzantenne (5, 13, 14, 15, 26) eine mit der Frequenz der wenigstens einen Sende-/Empfangsantenne (1, 10, 11, 12, 25) identische Sendefrequenz aufweist.

21. Funksystem nach einem der Ansprüche 13 bis 19, **dadurch gekennzeichnet, dass** die wenigstens eine Zusatzantenne (5, 13, 14, 15, 26) eine von der Frequenz der wenigstens einen Sende-/Empfangsantenne (1, 10, 11, 12, 25) abweichende Sendefrequenz aufweist.

22. Funksystem nach einem der Ansprüche 13 bis 20, **dadurch gekennzeichnet, dass** das Signal der wenigstens einen Zusatzantenne (5, 13, 14, 15, 26) als ein zu dem Sendesignal des Readers (18, 19, 24) oder der wenigstens einen Sende-/Empfangsantenne (1, 10, 11, 12, 25) invertiertes Signal ausgebildet ist oder dass in dem Signal der wenigstens einen Zusatzantenne (5, 13, 14, 15, 26) wenigstens ein negativer Puls vorgesehen ist.

23. Funksystem nach einem der Ansprüche 13 bis 22, **dadurch gekennzeichnet, dass** das Signal der wenigstens einen Zusatzantenne (5, 13, 14, 15, 26) als ein moduliertes oder unmoduliertes Signal ausgebildet ist.

24. Funksystem nach einem der Ansprüche 13 bis 23, **dadurch gekennzeichnet, dass** wenigstens zwei Reader (18, 24) in einem Netzwerk angeordnet sind.

25. Funksystem nach einem der Ansprüche 13 bis 24, **dadurch gekennzeichnet, dass** wenigstens zwei Sende-/Empfangsantennen (1, 10, 11, 12, 25) vorgesehen sind, die ein Antennenarray (9) bilden.

26. Funksystem nach einem der Ansprüche 13 bis 25, **dadurch gekennzeichnet, dass** wenigstens zwei Zusatzantennen (5, 13, 14, 15, 26) vorgesehen sind, die ein Antennenarray bilden.

27. Funksystem nach einem der Ansprüche 13 bis 26, **dadurch gekennzeichnet, dass** ein erster Reader (18) wenigstens eine Sende-/Empfangsantenne aufweist und dass ein zweiter Reader (19) wenigstens eine Zusatzantenne aufweist.
